# FASCICULE DE BREVET EUROPEEN

(11) **EP 3 360 753 B1**
(45) Date de publication et mention de la délivrance du brevet: **08.04.2020**
(21) Numéro de dépôt: 17208640.7
(22) Date de dépôt: 19.12.2017
(51) Int. Cl.: B62B 1/20, E01H 10/00

(54) **BROUETTE POUR L ÉPANDAGE D'UN MATÉRIAU**
SCHUBKARRE ZUM VERTEILEN EINES MATERIALS
WHEELBARROW FOR SPREADING A MATERIAL

(30) Priorité: 27.01.2017 FR 1750665
(43) Date de publication de la demande: 15.08.2018
(73) Titulaire: Vallez, Bernard, 11410 Salles sur l'Hers (FR)
(72) Inventeur: VALLEZ, Bernard, 11410 SALLES SUR L'HERS (FR)
(74) Mandataire: Calysta NV

(56) Documents cités:
- EP-A2- 1 201 120
- AU-B3- 726 746
- DE-U1-202011 106 085
- FR-A1- 2 774 347
- US-A- 1 618 443
- US-A- 1 888 821
- US-A- 2 330 944
- US-A1- 2016 144 757

## Description

### Domaine de l'invention

La présente invention s'applique au domaine de l'épandage de matériaux.

La présente invention vise une brouette pour l'épandage d'un matériau, et l'utilisation de ladite brouette pour épandre un matériau, notamment un matériau granuleux.

### Etat de l'art

Une brouette classique comprend une benne, un châssis avec deux bras formant des brancards, des pieds de repos et un système de roulement situé à l'avant de la brouette.

De telles brouettes son utilisées généralement pour le transport manuel de matériaux. Elles sont notamment utilisées pour transporter un matériau qui doit être épandu sur une surface nécessitant un épandage. Par exemple, une brouette classique peut être utilisée pour transporter du gravier qui doit être épandu sur une route fraichement goudronnée. Lorsque le matériau est apporté près de la surface nécessitant l'épandage avec la brouette, un individu peut alors faire basculer la benne de la brouette de sorte à en vider le contenu sur une partie de la surface nécessitant l'épandage et ensuite étaler le matériau sur la surface à l'aide d'un outil supplémentaire tel qu'un râteau ou une pelle. Cela est souvent difficile à réaliser pour l'individu, le poids de la benne remplie du matériau étant souvent très lourd.

La demande de brevet US 2016/0144757 divulgue une brouette facilitant la tache de basculement de la benne pour l'utilisateur car elle comprend un système d'assistance au basculement de la benne vers l'avant de la brouette grâce à une poignée fixée à l'arrière de la benne et au moins un vérin à gaz exerçant une pression sous l'arrière de la benne. La technique d'épandage utilisant cette brouette nécessite malgré tout beaucoup de temps, notamment pour étaler le matériau après l'avoir renversé sur une partie de la surface nécessitant l'épandage.

Une autre technique d'épandage connu est d'apporter la brouette proche de la zone d'épandage et ensuite, à l'aide d'un outil supplémentaire tel qu'une pelle, d'épandre petit à petit des pelletés sur la zone nécessitant l'épandage. Cette technique d'épandage a pour inconvénient de prendre beaucoup de temps et d'être peu précise en matière de régulation de la quantité de matériau épandue par unité de surface.

Le modèle d'utilité allemand DE 20 2011 106 085 U1 divulgue un chasse-neige à main pour balayer la neige d'une surface. Le chasse neige comprend un châssis auquel sont attachées deux bras pour la manipulation du chasse-neige à la main et au moins une roue pour le déplacement du chasse-neige. Le chasse neige comprend notamment un récipient de dispersion monté sur le châssis, ledit récipient comportant une ouverture dans une zone inférieure avec un volet réglable par l'intermédiaire de laquelle un matériau contenu par le récipient de dispersion peut s'écouler selon un débit réglable. Le chasse neige comporte aussi une plaque de distribution sous l'ouverture du récipient supporté de manière rotative autour d'un axe vertical et un mécanisme d'entrainement en rotation de la plaque de distribution monté de sorte que lorsque ladite au moins une roue du chasse-neige tourne, la plaque de distribution est entrainée en rotation autour de son axe vertical. Ainsi, lorsque le chasse-neige avance ou recule, le matériau qui s'écoule depuis l'ouverture en zone inférieure du récipient de distribution tombe sur la plaque de distribution en rotation et est projeté perpendiculairement à l'axe de rotation de la plaque.

Un tel dispositif de chasse-neige ne convient pas pour épandre un matériau avec précision. En effet, un épandage par projection perpendiculaire à l'axe de rotation de la plaque lorsque ladite plaque est en rotation, semble imprécis du fait qu'il ne permet pas de canaliser l'épandage selon une seule direction. Il est alors difficile de faire un épandage précis et homogène sur des surfaces nécessitant un épandage et comprenant notamment des angles décrits par des limites de la dite surface tels que des rebords surélevés d'un terrassement ou d'une allée. Le document US1618443 divulgue une brouette comprenant une paroi de fond, une paroi avant, une paroi arrière, deux parois latérales et une première ouverture supérieure.

### Exposé de l'invention

La présente invention a pour objectif de remédier à tout ou partie des limitations des solutions de l'art antérieur.

À cet effet, selon un premier aspect, la présente invention vise une brouette pour l'épandage d'un matériau, comportant une benne destinée à contenir au moins un matériau, ladite benne comprenant une paroi de fond, une paroi avant, une paroi arrière, deux parois latérales et une première ouverture supérieure,
une seconde ouverture dans ladite paroi de fond et/ou la paroi avant à travers laquelle le matériau est destiné à s'écouler,
un volet de fermeture fermant la seconde ouverture, et,
des moyens de contrôle de l'ouverture dudit volet de fermeture, ladite brouette comprenant en outre un plateau de distribution de forme globalement rectangulaire et étendu longitudinalement selon un axe longitudinal parallèle à un axe transversal de la brouette, sous toute la longueur de la seconde ouverture, ledit plateau étant positionné sous la seconde ouverture de sorte que lorsqu'un matériau s'écoule depuis l'ouverture par gravité, ledit matériau s'écoule sur le plateau le long de sa surface dans sa largeur vers une surface nécessitant l'épandage sous la brouette ou en avant de la brouette.

On entend par « en avant de la brouette » devant l'avant de la brouette, c'est-à-dire devant le point matériel de la brouette le plus en avant de la brouette par rapport au sens de marche de la brouette.

La brouette selon la présente invention a pour avantage un gain de temps lors d'épandage de matériau sur une surface car l'utilisateur n'a plus besoin de déposer la brouette à coté de la surface nécessitant l'épandage et de réaliser l'épandage avec un outil supplémentaire tel qu'une pelle. L'utilisateur peut directement épandre le matériau avec la brouette par simple ouverture du volet de fermeture en avançant avec la brouette au dessus de la surface nécessitant l'épandage. De plus cela permet aussi de réguler de manière plus précise la quantité de matériau épandu par unité de surface comparé à l'étalement avec un autre outil tel que la pelle, et ainsi faire une économie de matériau. La brouette selon l'invention à notamment pour avantage d'éviter à son utilisateur un effort considérable dans le but de basculer la benne en avant afin d'en vider le contenu par son ouverture supérieure sur la surface nécessitant l'épandage. Enfin, la brouette selon la présente invention a pour avantage d'être simple d'utilisation même pour une personne qui n'est pas habituée à manipuler ce genre d'outil. Cette brouette est facile à transporter d'un chantier à l'autre par rapport aux engins motorisés habituellement utilisés pour l'épandage qui sont lourds et imposants en taille. La brouette selon l'invention est d'ailleurs beaucoup plus maniable que de tels engins et permet d'accéder à certains endroits difficiles d'accès comme par exemple les bordures et angles de certaines surfaces nécessitant l'épandage, au niveau desquels des murs sont implantés.

Le plateau de distribution permet d'épandre par simple gravité en avant de la brouette ou sous cette dernière ce qui apporte une direction et une limite d'épandage précise. En effet le flux de matériaux ainsi épandu par seul écoulement par gravité le long de la surface dudit plateau dans sa largeur, est épandu de façon très précise par rapport à l'épandage que permettent de réaliser les dispositifs de l'art antérieur. La brouette objet de la présente invention permet ainsi d'épandre un matériau de façon précise et homogène par exemple au niveau d'angles et recoins d'une surface nécessitant un épandage.

Suivant des modes de réalisation préférés, l'invention répond en outre aux caractéristiques suivantes, mises en œuvre séparément ou en chacune de leurs combinaisons techniquement opérantes.

Dans un mode de réalisation particulier, la seconde ouverture est étendue longitudinalement entre les deux parois latérales selon un axe parallèle à l'axe transversal de la brouette. La capacité de surface d'épandage du matériau est ainsi avantageusement large selon la distance séparant les parois latérales de la brouette

Dans un mode de réalisation particulier, les moyens de contrôle de l'ouverture du volet de fermeture comportent un câble relié à un élément de contrôle actionnable au niveau d'une première extrémité du câble et relié au volet de fermeture au niveau d'une seconde extrémité du câble. Un exemple de câble utilisé dans la présente invention est un câble Bowden.

Dans un mode de réalisation particulier, la liaison du câble au volet de fermeture est réalisée par un jeu de bielles dans lequel une première bielle est articulée à la seconde extrémité du câble et à une deuxième bielle, ladite deuxième bielle étant articulée au volet de fermeture de sorte que lorsque l'élément de contrôle manuel est actionné le volet de fermeture ouvre la seconde ouverture.

Dans un mode de réalisation particulier, l'élément de contrôle actionnable est actionnable manuellement.

Dans un mode de réalisation particulier, la brouette comporte au moins deux brancards et l'élément de contrôle actionnable est positionné sur un des brancards.

Dans un mode de réalisation particulier, l'élément de contrôle actionnable est un levier.

Dans un mode de réalisation particulier, le volet de fermeture est fixé à la benne de façon mobile en rotation autour d'un axe B parallèle à un axe transversal de la brouette.

Dans un mode de réalisation particulier, le plateau de distribution comporte des gouttières de guidage positionnées de sorte à répartir de façon homogène l'écoulement du matériau sur la surface du plateau de distribution lorsque ledit matériau s'écoule le long de la surface dudit plateau. De telles gouttières permettent avantageusement de répartir de façon homogène l'écoulement du matériau sur la surface du plateau dans toute la longueur dudit plateau. Cela améliore encore plus l'homogénéité de l'épandage du matériau sur la surface nécessitant l'épandage.

Selon un dernier aspect, la présente invention vise l'utilisation de la brouette objet de la présente invention, pour épandre un matériau granuleux.

### Présentation des figures

L'invention sera mieux comprise à la lecture de la description suivante, donnée à titre d'exemple nullement limitatif, et faite en se référant aux figures qui représentent :
- Figure 1A : illustre une vue globale de la brouette selon un mode de réalisation de la présente invention.
- Figure 1B : illustre une autre vue globale de la brouette selon le mode de réalisation de la présente invention illustré en figure 1A.
- Figure 2 : illustre une vue d'une partie de l'intérieur de la benne de la brouette selon un mode de réalisation de la présente invention.
- Figure 3 : illustre une vue de l'avant de la brouette selon un mode de réalisation de la présente invention.

### Description détaillée de l'invention

On note dès à présent que les figures ne sont pas à l'échelle.

De manière plus générale, la portée de la présente invention ne se limite pas aux modes de réalisation décrits ci-dessus à titre d'exemples non limitatifs, mais s'étend au contraire à toutes les modifications à la portée de l'homme de l'art. Chaque caractéristique d'un mode de réalisation peut être mise en œuvre isolément ou combinée à toute autre caractéristique de tout autre mode de réalisation de manière avantageuse.

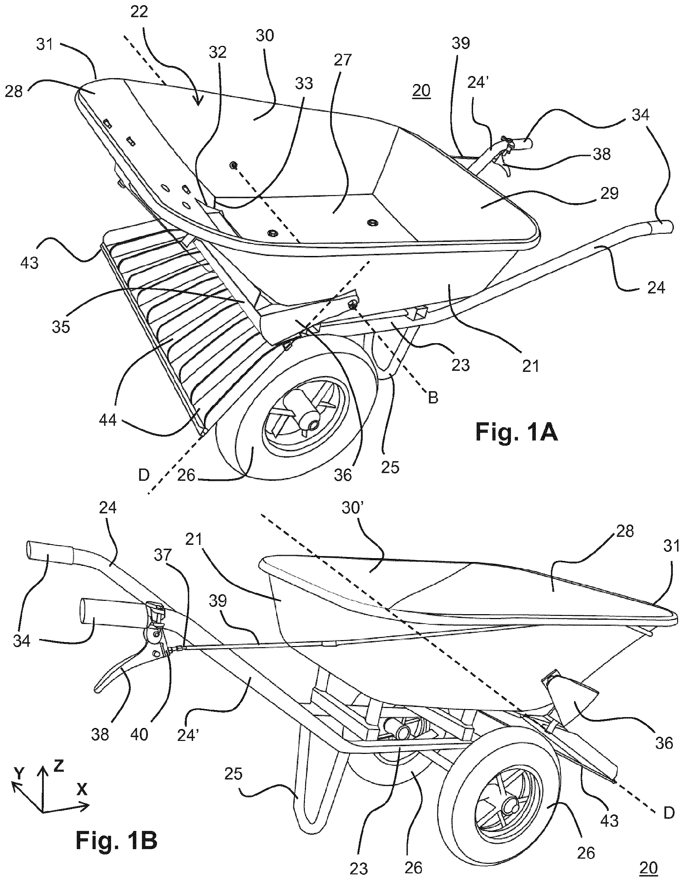

La présente invention vise une brouette pour l'épandage d'un matériau sur une surface, telle que le sol. Les figures 1 (1A et 1B) illustrent une brouette **20** selon un mode de réalisation de la présente invention. Ladite brouette 20 comporte une benne **21** comprenant une première ouverture supérieure **22,** ladite benne 21 étant destinée à contenir ledit matériau, un châssis **23,** deux brancards **24, 24',** au moins un pieds **25,** et au moins une roue **26.** Dans le mode de réalisation illustré en figures 1 la brouette 20 comprend deux roues 26.

On considère, dans le présent texte, un repère cartésien lié à la brouette 20 selon l'invention, comprenant un axe X parallèle à un axe longitudinal de la brouette 20 au repos, c'est-à-dire parallèle au sens d'avance de la brouette 20, un axe Y parallèle à un axe transversal de la brouette 20, orthogonal à l'axe X et s'étendant d'un flanc de la brouette 20 à l'autre, et un axe Z vertical. Les axes X et Y sont sensiblement horizontaux.

Les termes « horizontal » et « vertical », sont désignés par rapport à un plan XOY défini par plusieurs points matérialisant respectivement le contact entre une roue 26 de la brouette 20 et les pieds 25, 25' de la brouette 20 avec le sol. Plus précisément, un axe dit « horizontal » dans la présente demande est un axe parallèle au plan XOY et un axe dit « vertical » est un axe orthogonal au plan XOY.

En outre, les termes « haut » et « bas » sont définis le long de l'axe Z, un premier élément agencé plus haut qu'un second élément étant plus éloigné du plan XOY que ledit second élément.

La benne 21 est globalement en forme de tronc de pyramide renversé aux arrêtes arrondies. Elle comporte donc une paroi de fond **27** et un ensemble de quatre parois reliées latéralement entre elles composé d'une paroi avant **28,** une paroi arrière **29,** les termes « avant » et « arrière » étant relatif au sens d'avance de la brouette, ainsi que de deux parois latérales **30, 30'.** L'ensemble des arrêtes du haut des quatre parois forme une bordure **31** délimitant la première ouverture supérieure 22.

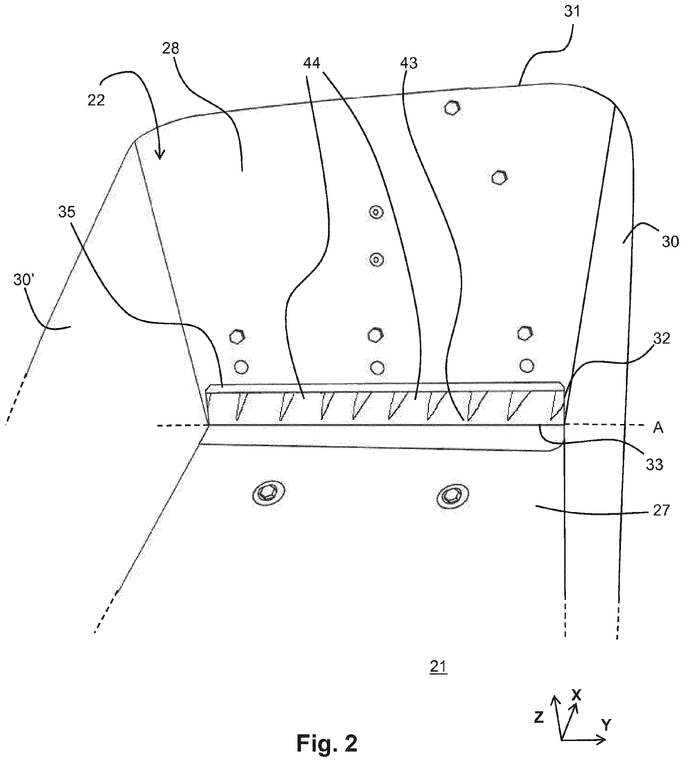

Tel qu'illustré en figure 2, la benne 21 comprend en outre une seconde ouverture **32** dans ladite paroi de fond 27 et/ou dans la paroi avant 28 à travers laquelle le matériau est destiné à s'écouler. De préférence, la seconde ouverture 32 et étendue longitudinalement entre les deux parois latérales 30, 30', selon un axe A parallèle à l'axe Y (parallèle à l'axe transversal de la brouette 20). Selon un exemple de réalisation préféré, la seconde ouverture 32 est étendue longitudinalement entre les deux parois latérales 30, 30', selon l'axe A, le long d'au moins une partie de l'arrête **33** délimitant la paroi de fond 27 de la paroi avant 28. Selon un autre exemple de réalisation la seconde ouverture 32 est étendue longitudinalement entre les deux parois latérales 30, 30', selon l'axe A et un des bords longitudinaux de l'ouverture est l'arrête 33.

La brouette 20 peut comprendre une poignée **34** de préhension disposée sur chaque brancard 24, 24', de préférence à leur extrémité, pour que l'utilisateur de la brouette 20 puisse saisir les brancards 24, 24', de façon plus confortable au niveau des poignées 34.

Selon un mode de réalisation de la présente invention, la brouette 20 comporte en outre un volet de fermeture **35** fermant la seconde ouverture 32.

Le volet de fermeture 35 est par exemple de forme rectangulaire plane étendue longitudinalement selon un axe longitudinal parallèle à l'axe Y. Selon un autre exemple le volet de fermeture 35 est de forme rectangulaire arrondie autour d'un axe parallèle à l'axe Y et étendue longitudinalement selon un autre axe longitudinal parallèle à l'axe Y.

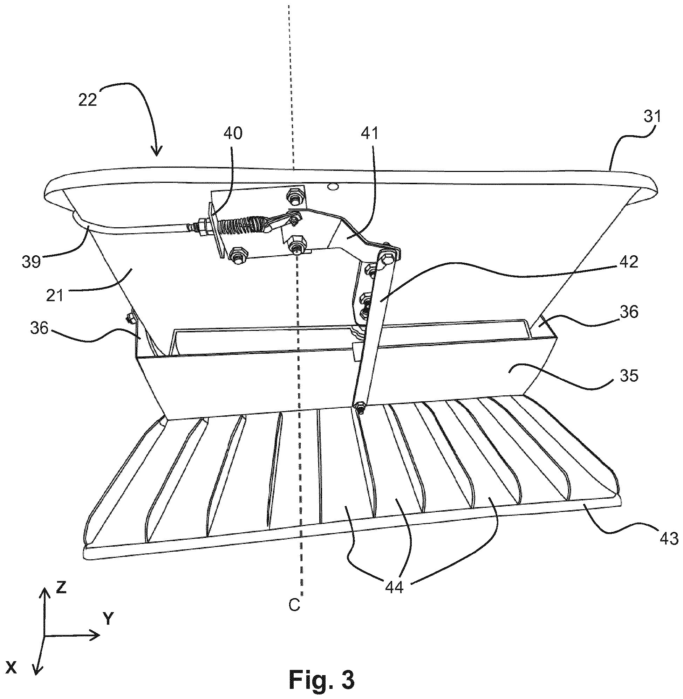

Le volet de fermeture 35 est fixé à la benne 21 de façon libre en rotation autour d'un axe B parallèle à l'axe Y. Selon un exemple de réalisation, le volet de fermeture 35 est fixé à la benne 21 de façon libre en rotation autour de l'axe B par des moyens de fixation comportant au moins un bras **36** longitudinal relié par une première extrémité du bras 36 à une extrémité du volet de fermeture 35 selon l'axe longitudinal du volet de fermeture 35, et par une deuxième extrémité du bras 36 à une des parois latérales 30, 30' de façon libre en rotation autour de l'axe B. Dans un autre exemple de réalisation, tel qu'illustré en figure 3 les moyens de fixation comprennent deux bras 36 chaque bras 36 étant relié respectivement à une extrémité de la longueur du volet de fermeture 35 différente et à une paroi latérale 30, 30', différente.

La brouette 20 comprend également des moyens de contrôle de l'ouverture dudit volet de fermeture 35.

Comme illustré en figures 1 et 3, lesdits moyens de contrôle de l'ouverture du volet de fermeture 35 comportent un câble **37** relié à un élément de contrôle actionnable **38** au niveau d'une première extrémité du câble 37 et au volet de fermeture 35 au niveau d'une seconde extrémité du câble 37.

L'élément de contrôle actionnable 38 illustré en figures 1 et 3 est actionnable manuellement. Dans ce mode de réalisation l'élément de contrôle actionnable est un levier tel que ceux utilisés pour les freins de vélos. Un système de câble Bowden, couramment utilisé pour les freins de vélos, est d'ailleurs utilisé comme câble 37 dans le présent mode de réalisation. Dans cet exemple de réalisation, l'élément de contrôle actionnable 38 est positionné au niveau de l'extrémité d'un brancard 24, de sorte à pouvoir être actionné manuellement par l'utilisateur de la brouette 20 lorsqu'il tient ladite brouette 20 par les brancards 24, 24'. L'élément de contrôle actionnable 38 est de préférence positionné de sorte qu'il soit proche de la poignée 34 disposée sur le brancard 24. L'élément de contrôle actionnable 38 peut par exemple être positionné sur ou sous la poignée 34.

Le câble 37 comporte une gaine **39** souple entourant ledit câble 37, chacune des deux extrémités de la gaine 39 étant fixée respectivement à une butée **40** percée qui permet le coulissement du câble 37. Une des butées 40 est fixée à la benne 21 tandis que l'autre est fixée au brancard 24 au niveau duquel est positionné l'élément de contrôle actionnable 38.

La liaison du câble 37 au volet de fermeture 35 est réalisée par un jeu de bielles dans lequel une première bielle **41** est articulée à la seconde extrémité du câble 37 et à une deuxième bielle **42,** ladite deuxième bielle 42 étant articulée au volet de fermeture 35, de sorte que lorsque l'élément de contrôle actionnable 38 est actionné, le volet de fermeture 35 s'ouvre. Selon un mode de réalisation la première bielle 41 est fixée à la benne 21 de façon libre en rotation autour d'un axe de rotation C. L'axe de rotation C peut être perpendiculaire à la paroi avant 28 de la benne 21.

Lorsque le volet de fermeture 35 n'est pas ouvert, la seconde ouverture 32 est fermée par ledit volet de fermeture 35 et un matériau qui se situe dans la benne 21 ne peut pas s'écouler par la seconde ouverture 32. Lorsque le volet de fermeture 35 est ouvert, il n'obstrue pas la seconde ouverture 32 qui est alors dégagée ce qui permet au matériau de s'écouler à travers la seconde ouverture 32.

Dans un mode de réalisation et tel qu'illustré en figures 1 et 3, la brouette 20 comporte un plateau **43** de distribution du matériau. Ce plateau 43 est positionné sous la seconde ouverture 32 de sorte que lorsqu'un matériau s'écoule depuis l'ouverture 32 par gravité, ledit matériau s'écoule sur le plateau 43 le long de sa surface dans sa largeur et s'écoule ensuite depuis le plateau 43 vers la surface nécessitant l'épandage sous la brouette 20 ou en avant de la brouette 20. Le plateau 43 de distribution est de forme globalement rectangulaire et est étendu longitudinalement selon un axe longitudinal parallèle à l'axe Y, sous toute la longueur de la seconde ouverture 32. De préférence, le plateau 43 est étendu longitudinalement sur une longueur correspondant à la distance entre les deux parois latérales 30, 30'.

Selon un mode de réalisation le plateau 43 de distribution est en outre étendu sur sa largeur selon un axe longitudinal parallèle à l'axe longitudinal de la brouette 20. Ainsi, lorsque la brouette 20 est au repos, c'est à dire que la ou les roues 26 et les pieds 25, 25' sont en contact avec le sol, le plateau 43 de distribution est étendu sensiblement à l'horizontal. Le plateau 43 est alors étendu en largeur selon un axe parallèle à l'axe X. Dans un autre mode de réalisation, comme illustré sur les figures 1 et 3, le plateau 43 de distribution est étendu sur sa largeur selon un axe longitudinal D incliné en pente dans le sens d'avance de la brouette 20 par rapport à l'axe longitudinal de la brouette 20. L'axe D est par exemple incliné d'un angle de 20° à 45° par rapport à l'axe longitudinal de la brouette 20.

Dans un mode de réalisation la longueur et la largeur du plateau 43 sont égales et le plateau est donc de forme globalement carré.

Le plateau 43 est fixé de façon réversible ou non à la benne 21. Dans un mode de réalisation ledit plateau 43 est fixé à la paroi de fond 27 et/ou à la paroi avant 28 de la benne 21. Différents moyens de fixation peuvent être utilisés pour fixer le plateau 43 à la benne 21, par exemple, par soudure d'un des bords du plateau 43 à la benne 21, ou encore par des moyens de vissage du plateau 43 à la benne 21.

Selon un mode de réalisation ledit plateau 43 de distribution comporte des gouttières de guidage **44.** Selon un mode de réalisation, les gouttières de guidage 44 sont étendues longitudinalement sur le plateau 43 selon des axes parallèles à la largeur du plateau 43. Lesdites gouttières de guidage 44 permettent de répartir de façon homogène l'écoulement du matériau sur la surface du plateau 43 de sorte que ledit écoulement du matériau depuis le plateau 43 vers la surface nécessitant l'épandage s'effectue de manière homogène sur toute la longueur du plateau 43 étendue selon un axe parallèle à l'axe Y.

### Exemple de mise en œuvre de la brouette 20 objet de la présente invention :

La benne 21 de la brouette 20 est remplie d'un matériau, par exemple un matériau granuleux tel que du gravier. La brouette 20 est ensuite manipulée par un utilisateur de sorte à faire rouler la brouette 20 vers et sur la surface nécessitant l'épandage du matériau. Lorsque la brouette 20 atteint la surface nécessitant l'épandage, tout en continuant à avancer sur ladite surface, l'utilisateur actionne l'élément de contrôle actionnable 38 déclenchant ainsi l'ouverture du volet de fermeture 35. En étant actionné, l'élément de contrôle actionnable 38 effectue une traction sur le câble 37 qui effectue alors une traction sur la première bielle 41 au niveau de l'articulation entre le câble 37 et la première bielle 41. La traction sur la première bielle 41 entraine la rotation de ladite première bielle 41 autour de l'axe de rotation C. La rotation effectuée par la première bielle 41 entraine une traction sur la deuxième bielle 42 qui effectue alors une traction sur le volet de fermeture 35 engendrant ainsi l'ouverture du volet de fermeture 35. L'ouverture du volet de fermeture 35 permet alors le déversement du matériau contenu dans la benne 21 par la seconde ouverture 32. Le matériau s'écoule alors sur le plateau 43 de distribution. On note que, le plateau 43 de distribution est étendu sur sa largeur selon un axe longitudinal D incliné en pente dans le sens d'avance de la brouette 20 par rapport à l'axe longitudinal de la brouette 20. Le matériau s'écoule donc par gravité dans le sens de la largeur du plateau 43 et sur toute la longueur du plateau 43 de façon homogène grâce à la présence des gouttières de guidage 44. Après avoir parcouru la largeur du plateau 43 de distribution, le matériau s'écoule par gravité de façon homogène depuis toute la longueur du plateau 43 vers la surface nécessitant l'épandage. L'utilisateur arrête d'actionner l'élément de contrôle actionnable 38 lorsqu'il veut stopper l'écoulement du matériau. L'arrêt de cet actionnement entraine la fermeture de la seconde ouverture 32 par le volet de fermeture 35 selon le mécanisme inverse utilisé pour l'ouverture de ce dernier. La fermeture de la seconde ouverture 32 empêche l'écoulement du matériau présent dans la benne 21 par ladite seconde ouverture 32.

### Variantes de réalisation de l'invention :

Dans un mode de réalisation particulier l'élément de contrôle actionnable 38 est actionnable selon différentes positions, chaque position dudit élément de contrôle actionnable 38 correspondant à une position d'ouverture du volet de fermeture 35 et donc à un débit d'écoulement différent du matériau depuis la seconde ouverture 32.

Dans un mode de réalisation particulier, la brouette 20 comporte un système de conditionnement de l'écoulement du matériau (non représenté sur les figures) en fonction de la vitesse d'avancement de la brouette 20. Un tel système peut comprendre un cylindre étendu longitudinalement selon un axe de révolution parallèle à l'axe Y, dans la benne 21, entre les parois latérales 30, 30', et au dessus de la seconde ouverture 32 de sorte à laisser s'écouler par l'ouverture 32 le matériau en fonction de la vitesse de rotation dudit cylindre autour dudit axe de révolution, ladite vitesse de rotation du cylindre étant dépendante de la vitesse d'avancement de la brouette 20.

Dans un mode de réalisation la benne 21 est détachable de façon réversible des autres éléments de la brouette 20.

Dans un mode de réalisation particulier, la brouette 20 comporte des freins.

Dans un mode de réalisation particulier, la brouette 20 comporte des feux de signalisation.

Dans un mode de réalisation particulier, la brouette 20 comporte un système de mise en vibration de la benne 21 et/ou du plateau 43 de distribution, pour faciliter l'écoulement du matériau par la seconde ouverture 32. Cela est notamment avantageux lorsque le matériau est humide ou collant.

Dans un mode de réalisation particulier, la brouette 20 comporte un système électrique ou thermique d'assistance à la motricité de la brouette 20.

Dans un mode de réalisation particulier, la brouette 20 comporte une paroi de percussion positionnée devant le plateau 43 de distribution selon l'axe longitudinal de la brouette 20, de sorte que lorsque le matériau à épandre s'écoule du plateau 43 de distribution vers le sol, ledit matériau percute la paroi de percussion avant de toucher le sol. Une telle paroi peut être de forme globalement rectangulaire et rattachée au plateau 43 par des moyens de fixation réversible.

## Revendications

1. Brouette (20) pour l'épandage d'un matériau comportant une benne (21) destinée à contenir au moins un matériau, ladite benne (21) comprenant une paroi de fond (27), une paroi avant (28), une paroi arrière (29), deux parois latérales (30, 30'), une première ouverture supérieure (22), **caractérisée en ce qu'**elle comprend une seconde ouverture (32) dans ladite paroi de fond (27) et/ou la paroi avant (28) à travers laquelle le matériau est destiné à s'écouler, un volet de fermeture (35) fermant la seconde ouverture (32), et, des moyens de contrôle de l'ouverture dudit volet de fermeture (35), la brouette (20) comprend un plateau (43) de distribution de forme globalement rectangulaire et étendu longitudinalement selon un axe longitudinal parallèle à un axe transversal de la brouette (20), sous toute la longueur de la seconde ouverture (32), ledit plateau (43) étant positionné sous la seconde ouverture (32) de sorte que lorsqu'un matériau s'écoule depuis l'ouverture (32) par gravité, ledit matériau s'écoule sur le plateau (43) le long de sa surface dans sa largeur vers une surface nécessitant l'épandage sous la brouette (20) ou en avant de la brouette (20).

2. Brouette (20) selon la revendication 1, dans laquelle ladite seconde ouverture (32) est étendue longitudinalement entre les deux parois latérales (30, 30') selon un axe parallèle à l'axe transversal de la brouette (20).

3. Brouette (20) selon l'une quelconque des revendications 1 à 2, dans laquelle les moyens de contrôle de l'ouverture du volet de fermeture (35) comportent un câble (37) relié à un élément de contrôle actionnable (38) au niveau d'une première extrémité du câble (37) et relié au volet de fermeture (35) au niveau d'une seconde extrémité du câble (37).

4. Brouette (20) selon la revendication 3, dans laquelle la liaison du câble (37) au volet de fermeture (35) est réalisée par un jeu de bielles dans lequel une première bielle (41) est articulée à la seconde extrémité du câble (37) et à une deuxième bielle (42), ladite deuxième bielle (42) étant articulée au volet de fermeture (35) de sorte que lorsque l'élément de contrôle actionnable (38) est actionné le volet de fermeture (35) ouvre la seconde ouverture (32).

5. Brouette (20) selon l'une quelconque des revendications 3 à 4, dans laquelle l'élément de contrôle actionnable (38) est actionnable manuellement.

6. Brouette (20) selon l'une quelconque des revendications 3 à 5, comportant au moins deux brancards (24, 24'), et dans laquelle l'élément de contrôle actionnable (38) est positionné sur un des brancards (24, 24').

7. Brouette (20) selon l'une quelconque des revendications 3 à 6, dans laquelle l'élément de contrôle actionnable (38) est un levier.

8. Brouette (20) selon l'une quelconque des revendications 1 à 7, dans laquelle le volet de fermeture (35) est fixé à la benne (21) de façon mobile en rotation autour d'un axe B parallèle à un axe transversal de la brouette (20).

9. Brouette (20) selon l'une quelconque des revendications 1 à 8, dans laquelle le plateau (43) de distribution comporte des gouttières de guidage (44) positionnées de sorte à répartir de façon homogène l'écoulement du matériau sur la surface du plateau (43) de distribution lorsque ledit matériau s'écoule le long de la surface dudit plateau (43).

10. Utilisation de la brouette (20) selon l'une quelconque des revendications 1 à 9, pour épandre un matériau granuleux.

## Patentansprüche

1. Schubkarre (20) zum Streuen eines Materials, die eine Mulde (21) umfasst, die dazu bestimmt ist, mindestens ein Material zu enthalten, wobei die Mulde (21) eine Grundwand (27), eine Vorderwand (28), eine Rückseitenwand (29), zwei Seitenwände (30, 30'), eine erste obere Öffnung (22) umfasst, **dadurch gekennzeichnet, dass** sie eine zweite Öffnung (32) in der Grundwand (27) und/oder der Vorderwand (28) umfasst, durch die das Material abfließen soll, wobei eine Verschlussklappe (35) die zweite Öffnung (32) verschließt, und Mittel zum Steuern des Öffnens der Verschlussklappe (35), wobei die Schubkarre (20) eine Verteilungsplatte (43) mit insgesamt Rechteckform umfasst, und die sich längs entlang einer Längsachse parallel zu einer Querachse der Schubkarre (20) unter der gesamten Länge der zweiten Öffnung (32) erstreckt, wobei die Platte (43) unter der zweiten Öffnung (32) derart positioniert ist, dass, wenn ein Material von der Öffnung (32) schwerkraftbedingt abfließt, das Material auf der Platte (43) entlang ihrer Oberfläche in ihrer Breite zu einer Oberfläche abfließt, die das Streuen unter der Schubkarre (20) oder vor der Schubkarre (20) erfordert.

2. Schubkarre (20) nach Anspruch 1, wobei sich die zweite Öffnung (32) längs zwischen den zwei Seitenwänden (30, 30') entlang einer Achse parallel zu der Querachse der Schubkarre (20) erstreckt.

3. Schubkarre (20) nach einem der Ansprüche 1 bis 2, wobei die Steuermittel des Öffnens der Verschlussklappe (35) ein Kabel (37) umfassen, das mit einem betätigbaren Steuerelement (38) in dem Bereich eines ersten Endes des Kabels (37) verbunden ist, und mit der Verschlussklappe (35) in dem Bereich eines zweiten Endes des Kabels (37) verbunden ist.

4. Schubkarre (20) nach Anspruch 3, wobei die Verbindung des Kabels (37) mit der Verschlussklappe (35) durch einen Satz Pleuel hergestellt ist, wobei ein erstes Pleuel (41) an dem zweiten Ende des Kabels (37) und an einem zweiten Pleuel (42) angelenkt ist, wobei das zweite Pleuel (42) an der Verschlussklappe (35) derart angelenkt ist, dass, wenn das betätigbare Steuerelement (38) betätigt wird, die Verschlussklappe (35) die zweite Öffnung (32) öffnet.

5. Schubkarre (20) nach einem der Ansprüche 3 bis 4, wobei das betätigbare Steuermittel (38) manuell betätigbar ist.

6. Schubkarre (20) nach einem der Ansprüche 3 bis 5, die mindestens zwei Holme (24, 24') umfasst, und wobei das betätigbare Steuerelement (38) auf einem der Holme (24, 24') positioniert ist.

7. Schubkarre (20) nach einem der Ansprüche 3 bis 6, wobei das betätigbare Steuerelement (38) ein Hebel ist.

8. Schubkarre (20) nach einem der Ansprüche 1 bis 7, wobei die Verschlussklappe (35) an der Mulde (21) auf bewegliche Art in Drehung um eine Achse B parallel zu einer Querachse der Schubkarre (20) befestigt ist.

9. Schubkarre (20) nach einem der Ansprüche 1 bis 8, wobei die Verteilungsplatte (43) Führungsrinnen (44) umfasst, die derart positioniert sind, dass das Abfließen des Materials auf der Oberfläche der Verteilungsplatte (43) homogen ist, wenn das Material entlang der Oberfläche der Platte (43) abfließt.

10. Verwendung der Schubkarre (20) nach einem der Ansprüche 1 bis 9, zum Streuen eines körnigen Materials.

## Claims

1. Wheelbarrow (20) for the spreading of a material comprising a bucket (21) intended to contain at least one material, said bucket (21) comprising a base wall (27), a front wall (28), a rear wall (29), two side walls (30, 30'), a first upper opening (22), **characterised in that** it comprises a second opening (32) in said base wall (27) and/or the front wall (28) through which the material is intended to flow, a closing flap (35) closing the second opening (32) and means for controlling the opening of said closing flap (35), the wheelbarrow (20) comprises a distribution plate (43) which is a generally rectangular shape and extends longitudinally according to a longitudinal axis parallel to a transverse axis of the wheelbarrow (20), under the whole length of the second opening (32), said plate (43) being positioned under the second opening (32) so that when a material flows gravitationally through the opening (32), said material flows over the plate (43) along its surface across its width towards a surface requiring the application under the wheelbarrow (20) or in front of the wheelbarrow (20).

2. Wheelbarrow (20) according to claim 1, wherein said second opening (32) extends longitudinally between the two side walls (30, 30') according to an axis parallel to the transverse axis of the wheelbarrow (20).

3. Wheelbarrow (20) according to any one of claims 1 to 2, wherein the means for controlling the opening of the closing flap (35) comprise a cable (37) connected to an operable controlling element (38) at a first end of the cable (37) and connected to the closing flap (35) at a second end of the cable.

4. Wheelbarrow (20) according to claim 3, wherein the connection of the cable (37) to the closing flap (35) is implemented by a set of connecting rods in which a first connecting rod (41) is connected to the second end of the cable (37) and a second connecting rod (42), said second connecting rod (42) being connected to the closing flap (35) so that when the operable controlling element (38) is operated, the closing flap (35) opens the second opening (32).

5. Wheelbarrow (20) according to any one of claims 3 to 4, wherein the operable controlling element (38) is manually operable.

6. Wheelbarrow (20) according to any one of claims 3 to 5, comprising at least two shafts (24, 24'), and wherein the operable controlling element (38) is positioned on one of the shafts (24, 24').

7. Wheelbarrow (20) according to any one of claims 3 to 6, wherein the operable controlling element (38) is a lever.

8. Wheelbarrow (20) according to any one of claims 1 to 7, wherein the closing flap (35) is fixed to the bucket (21) in a rotatably moveable fashion around an axis B parallel to a transverse axis of the wheelbarrow (20).

9. Wheelbarrow (20) according to any one of claims I to 8, wherein the distribution plate (43) comprises guide channels (44) positioned so as to distribute the flow of the material on the surface of the distribution plate (43) in a homogeneous manner when said material flows along the surface of said plate (43).

10. Use of the wheelbarrow (20) according to any one of claims 1 to 9 to spread a granular material.
